**Europäisches Patentamt**

**European Patent Office**

**Office européen des brevets**

(19)

(11) Publication number: **0 469 151 A1**

# EUROPEAN PATENT APPLICATION
## published in accordance with Art. 158(3) EPC

(12)

(21) Application number: **91903607.9**

(22) Date of filing: **06.02.91**

(86) International application number:
**PCT/JP91/00145**

(87) International publication number:
**WO 91/13489 (05.09.91 91/21)**

(51) Int. Cl.5: **H02P 5/00**

(30) Priority: **21.02.90 JP 40471/90**

(43) Date of publication of application:
**05.02.92 Bulletin 92/06**

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **NIHEI, Ryo, Fanuc Mansion**
**Harimomi 7-210**
**3539-1, Shibokusa, Oshinomura,**
**Minamitsuru-gun**
**Yamanashi 401-05(JP)**
Inventor: **KATO, Tetsuaki, Fanuc Mansion**
**Harimomi 8-101**
**3511-1, Shibokusa, Oshinomura,**
**Minamitsuru-gun**
**Yamanashi 401-05(JP)**
Inventor: **YOSHIDA, Osamu, Fanuc Dai-3**
**Bira-karamatsu**
**3527-1, Shibokusa, Oshinomura,**
**Minamitsuru-gun**
**Yamanashi 401-05(JP)**
Inventor: **ARITA, Soichi, Fanuc Dai-3**
**Bira-karamatsu**
**3527-1, Shibokusa, Oshinomura,**
**Minamitsuru-gun**
**Yamanashi 401-05(JP)**

(74) Representative: **Brunner, Michael John et al**
**GILL JENNINGS & EVERY 53-64 Chancery**
**Lane**
**London WC2A 1HN(GB)**

(54) **METHOD OF LEARNING FEED-FORWARD GAIN IN MOTOR CONTROL.**

(57) A method of learning a feed-forward gain in motor control of a control system in which a load inertia fluctuates drastically. The feed-forward gain K is determined by learning in accordance with the following formula: $(dK/dt) = [VER^*(dU/dt)]/[1 - VER^*(dU/dt)]$ where K is the feed-forward gain, t is the time, VER is an error value and U is an instruction value. A feed-forward gain L of a position loop is fixed (SP1) and a feed-forward gain M of a speed loop is determined by learning (SP2, SP3). Then, a feed-forward gain L is determined by learning (SP4, SP5). In this manner, an optimum feed-forward gain can be determined even when an inertia value is not known.

START

SP1

L = 0 OR 1

SP2

DETERMINE M
BY LEARNING

SP3

M CONVERGED ?   NO

YES

SP4

DETERMINE L
BY LEARNING

SP5

L CONVERGED ?   NO

YES

END

Fig. 1

Technical Field

The present invention relates to a method of learning a feed-forward gain in motor control, and more particularly to a method of learning a feed-forward gain in motor control to determine a feed-forward gain of optimum value through a learning process if inertia variations are very large or the value of inertia is unknown.

Background Art

Systems such as robots have mechanical actuators whose load inertia varies greatly depending on whether robot arms are extended or contracted, and which have large velocity-reduction ratios between servomotors and mechanisms actuated thereby. The use of only an ordinary feedback control process on which systems is not practical as responses of the systems are too slow.

There is known a feed-forward control process for reducing servo errors in a servo control system. The feed-forward control process is capable of drastically reducing servo errors if a feed-forward gain matches a feedback control system, particularly, its inertia or the like.

According to the conventional feed-forward control process, however, the feed-forward gain cannot be calculated if the value of inertia is unknown. If there are inertia variations, it is highly difficult to calculate the average value of the inertia variations, and any such calculations will be quite tedious and time-consuming.

Disclosure of the Invention

In view of the aforesaid drawbacks of the conventional feed-forward control process, it is an object of the present invention to provide a method of determining feed-forward gain through a learning process in motor control.

To achieve the above object, there is provided in accordance with the present invention a method of learning a feed-forward gain in motor control in a control system where a load inertia varies greatly, said method comprising the steps of establishing a first equation: $(dK/dt) = [VER^*(dU/dt)]/[1 - VER^*(dU/dt)]$ where K represents a food-forward gain, t time, VER an error, and U a command, and determining the feed-forward gain K according to the first equation in a learning process.

As described below, by determining the feed-forward gain according to the above equation, it is possible to converge the error to a minimum value of 0. With the feed-forward gain determined according to the learning process, the method of the invention is applicable to control systems where the load inertia varies greatly.

Brief Description of the Drawings

FIG. 1 is a flowchart of a method of learning a feed-forward gain in motor control according to the present invention;
FIG. 2 is a block diagram of a velocity loop in the motor control;
FIG. 3 is a block diagram of transfer functions for producing a velocity command as an output signal;
FIG. 4 is a block diagram of a control system having a feed-forward control loop for each of a position control loop and a velocity control loop; and
FIG. 5 is a block diagram of a hardware arrangement of a servo control loop for a robot to which the present invention is applicable.

Best Mode for Carrying Out the Invention

An embodiment of the present invention will hereinafter be described with reference to the drawings.

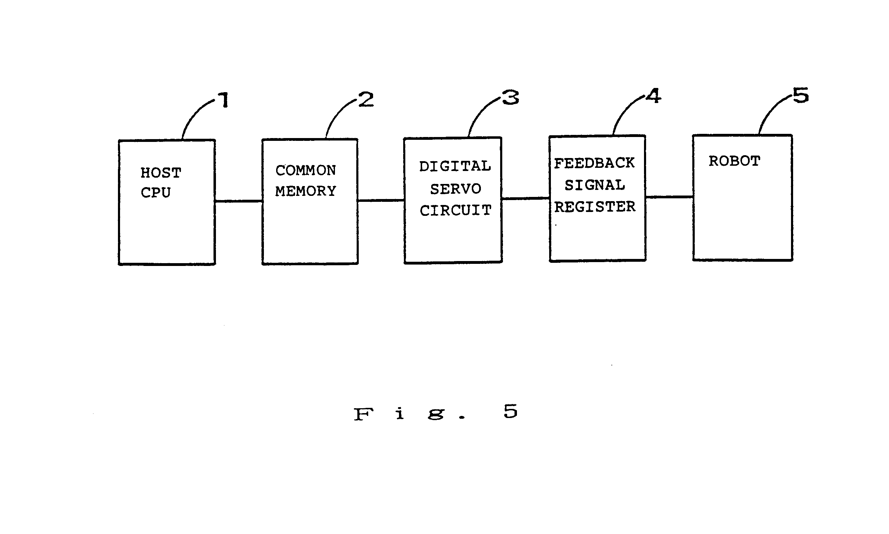

FIG. 5 shows in block form a hardware arrangement of a servo control loop for a robot to which the present invention is applicable. A host CPU 1 is a processor for controlling a robot control apparatus as a whole, and has a ROM (not shown) for storing a system program and a work RAM (not shown). The host CPU 1 writes position commands into a common memory 2. A servo control digital servo circuit 3 is mainly composed of a DSP (digital signal processor) and has a ROM (not shown) for storing a control program and a RAM (not shown) for storing data. The digital servo circuit 3 reads a position command from the common memory 2 in every constant period of time, and also reads motor information from a feedback signal register 4. The digital servo circuit 3 also calculates commands for a servo control system, and controls the position, velocities, and currents of servomotors of respective axes in a robot 5. Various calculations of a method of learning a feed-forward gain in motor control, which will be described below, are also carried out by the digital servo circuit 3.

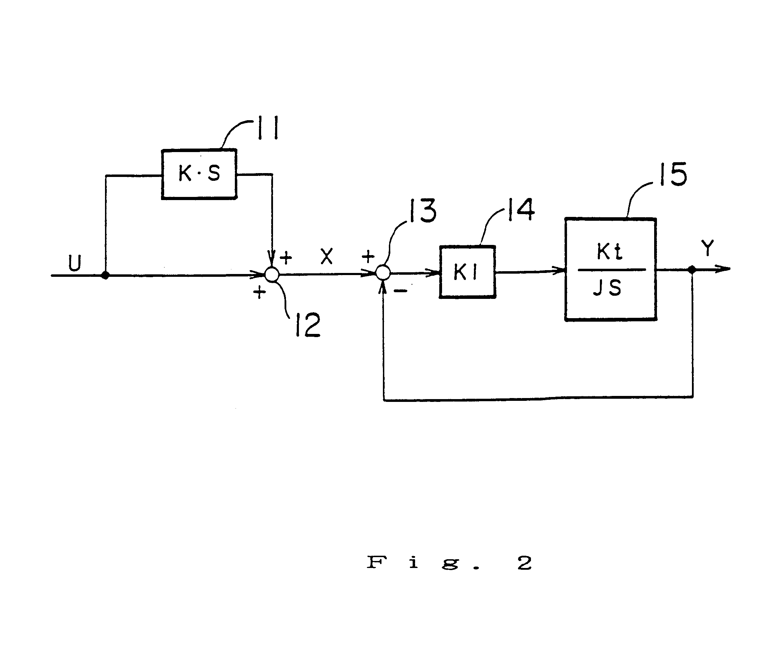

Determination of a feed-forward gain K through a learning process will be described below. For example, a velocity loop in motor control will be considered. FIG. 2 shows in block form a velocity loop in motor control . A velocity command U and the velocity command U as it has passed through a transfer function 11 of a feed-forward loop are added by an adder 12, thus producing an output signal X. Denoted by K in the transfer function 11 is a feed-forward gain. The output signal X is then applied to an adder 13 by which a velocity feedback quantity Y is subtracted from the output signal X. The difference is delivered from the adder 13 to a transfer function 14 where K1 indicates a velocity loop gain. The transfer function block 14 applies an output signal to a transfer function 15 where Kt indicates the torque constant of a servomotor, J the inertia of a mechanical system as viewed from the shaft of the servomotor, where the inertia varies greatly depending on the robot attitude, and S a Laplace operator.

In the velocity loop shown in FIG. 2, the following equation is satisfied:

$$U^*(1 + KS) = X$$

where U is the velocity command, Y the velocity feedback quantity, (U - Y) the velocity difference or error, and S the Laplace operator. Solving the above equation for U, the following equation is given:

$$U = 1/(1 + KS)^*X$$

Noting the relationship:

$$1/(1 + KS) = 1 - KS + K^2S^2 - K^3S^3 ...,$$

a low-frequency range of the input signal U will be considered. Actually, the frequency of the input signal U is low, and if the input signal U contains high-frequency components, then the high-frequency components are cut off by a software-implemented filter.

Since $1/(1 + KS) \fallingdotseq 1 - KS$,

the following equation is satisfied:

$$U = (1 - KS)X \qquad (1a).$$

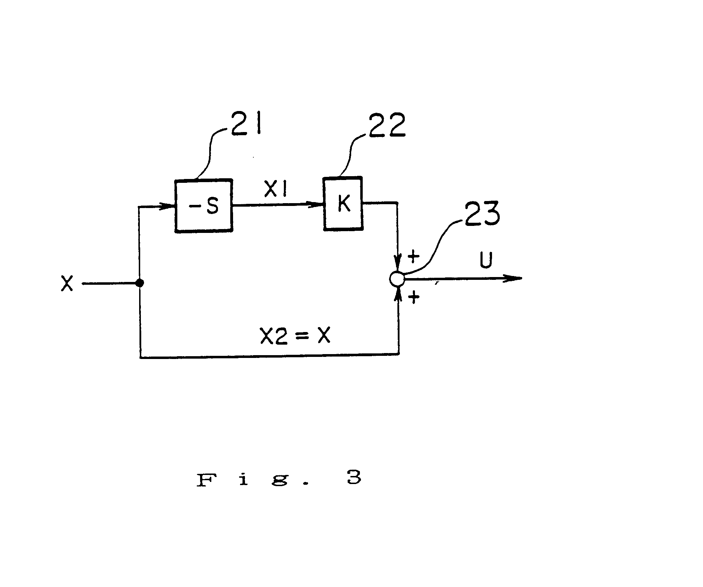

FIG. 3 is a block diagram of transfer functions for producing a velocity command as an output. The equation (1a) is equivalent to the illustrated arrangement where the signal X is applied as an input signal and it is supplied through transfer functions 21, 22 to an adder 23 and also supplied directly to the adder 23.

If it is assumed that

$$E = (1/2) * (U - Y)^2$$
$$= (1/2)*(velocity\ error)^2,$$

then since U = X1*K + X2, the following equation is given:

$$E = (1/2)^*(X1^*K + X2 - Y)^2.$$

Then, (dK/dt) is determined so that the following equation is satisfied:

$$(dK/dt) = - (\partial E/\partial K) \qquad (1).$$

This is because

$$(dE/dt) = (\partial E/\partial K)*(dK/dt)$$
$$= (\partial E/\partial K)*[- (\partial E/\partial K)]$$
$$= - (\partial E/\partial K)^2 \leqq 0,$$

and, as a result, the parameter E monotonously decreases and converges to a minimum value of 0, causing the error to become zero, so that the feed-forward gain K can be determined with a learning function.

If the velocity error is represented by VER, then the following equation is satisfied:

$$(\partial E/\partial K) = VER*(dVER/dK)$$
$$= VER*X1.$$

By substituting X1 = - (dX/dt) in the above equation, the following equation is given:

$$(\partial E/\partial K) = - VER^*(dX/dt) \qquad (2).$$

From the equations (1) and (2), the following equation is obtained:

$$(dK/dt) = VER^*(dX/dt) \qquad (3).$$

The equation U(1 + K*S) = X is rewritten into U + K*(dU/dt) = X. When both sides of the last equation are differentiated with respect to t, the following equation is produced:

$$(dU/dt) + (dK/dt)^*(dU/dt) + K^*(d^2U/dt^2) = (dX/dt) \qquad (4).$$

Since the input signal U is considered in the low frequency range only, $(d^2U/dt^2) \fallingdotseq 0$, and hence the following equation is given:

$$(dU/dt) + (dK/dt)^*(dU/dt) = (dK/dt) \qquad (5).$$

Substituting the equation (5) in the equation (3), the following equation is obtained:

$$(dK/dt) = VER^*[dU/dt + (dK/dt)^*(dU/dt)],$$

and the following equation is given:

(dK/dt) = [VER*(dU/dt)]/[1 - VER*(dU/dt)]    (6).

If (dK/dt) in the equation (3) is replaced with:

(dK/dt) = α*VER*(dX/dt)    (6a)

(which is satisfied if α > 0, the condition here being α > 0, α being close to 0), then the equation (5) becomes (dU/dt) = (dX/dt). When this equation is substituted in the equation (6), the following equation is given:

(dX/dt) = α*VER*(dU/dt)
(α > 0, α being close to 0)    (7).

Therefore, if the feed-forward gain is determined through a learning process so that the equation (7) will be satisfied, then it is possible to effect a feed-forward control process with a reduced error.

In the above example, the feed-forward control process has been described with reference to the velocity control loop. However, if K is used to indicate a feed-forward gain and VER an error, then the feed-forward control process may be applied to another control loop, i.e., a position control loop. In the position control loop, the command is given as a position command, the feed-forward gain as a feed-forward gain of a position loop, and the error as a position error.

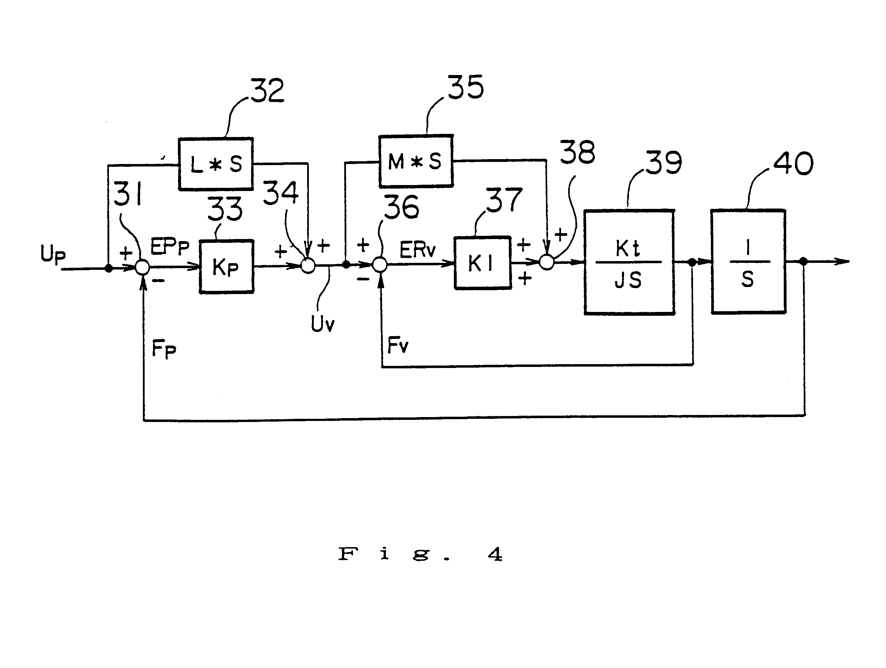

FIG. 4 shows in block form a motor control system having a feed-forward control loop for each of a position control loop and a velocity control loop. A position command Up is supplied to an adder 31, which determines the difference between the position command Up and a position feedback quantity Fp, the difference representing a position error ERP. The position error ERP is multiplied by a position control loop gain Kp by a transfer function 33, and the product is applied to an adder 34. The position command Up is also differentiated by a transfer function 32 (i.e., multiplied by L*S) of a feed-forward loop, where L represents the feed-forward gain of the position control loop and S a Laplace operator. The differentiated position command is supplied to the adder 34.

The adder 34 produces a velocity command Uv as an output signal. The velocity command Uv is supplied to an adder 36, which determines the difference between the velocity command Uv and a velocity feedback quantity Fv. The determined difference is sent as a velocity error ERv to a transfer function 37. The transfer function 37 has a velocity control loop gain K1, and multiplies the velocity error ERv by the velocity control loop gain K1. The product is supplied to an adder 38. The velocity command Uv is also differentiated by a transfer function 35 (i.e., multiplied by M*S) of a feed-forward loop of the velocity control loop, where M represents the feed-forward gain of the velocity control loop and S a Laplace operator. The differentiated velocity command is supplied to the adder 38.

The output signal from the adder 38 is then supplied to a transfer function 39. The transfer function 39 represents a mechanical system including a servomotor, where Kt is the torque constant of the servomotor, and J the inertia of the mechanical system as viewed from the shaft of the servomotor. The output signal from the transfer function 39 indicates the velocity of the mechanical system. The output signal from the transfer function 39 is integrated by a transfer function 40, which produces an output signal indicative of the position of the mechanical system.

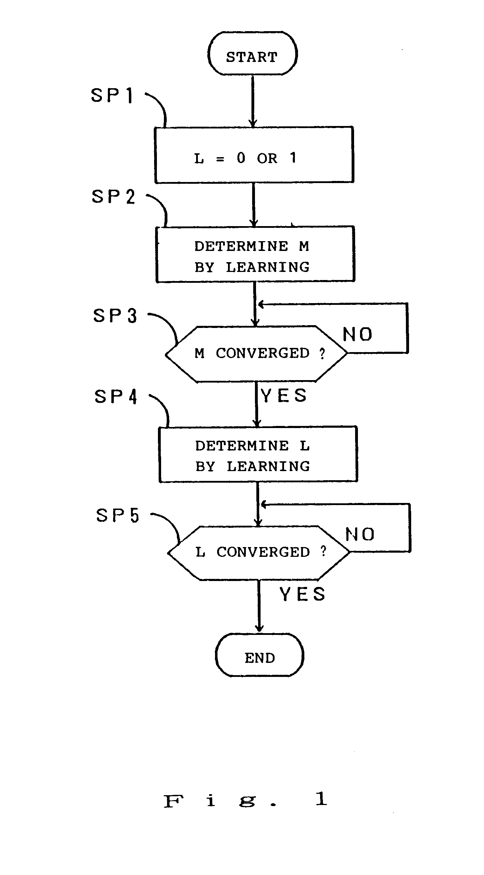

FIG. 1 is a flowchart of a method of learning a feed-forward gain according to the present invention. The flowchart of FIG. 1 is used to determine the feed-forward gains of the motor control system shown in FIG. 4. The numerals following the letters "SP" indicate step numbers.

The learning method is carried out while a control system, i.e., a robot, is being operated in an application, e.g., a palletizing program executed by the user.

[SP1] The feed-forward gain L of a position control loop is fixed as 0 or 1.

[SP2] The feed-forward gain M of a velocity control loop is varied successively from 0. At this time, the equation (7) is relied on, and the feed-forward gain M is converged according to the equation:

(dM/dt) = α*ERv*(dUv/dt)
(α > 0, α being close to 0).

[SP3] It is determined whether the feed-forward gain M has been converged or not. It it has been converged, then control proceeds to a step SP4, and it not, then control returns to the stop SP2 for learning the feed-forward gain M.

[SP4] The feed-forward gain L of the velocity control loop is learned while it is being varied. At this time, the equation (7) is also relied on, and the feed-forward gain L is converged according to the equation:

(dL/dt) = β*ERp*(dUp/dt)
(β > 0, β being close to 0).

[SP5] It is determined whether the feed-forward gain L has been converged or not. It it has not been converged, then control returns to the step SP4 for continuously learning the feed-forward gain L.

Therefore, even if the value of inertia is unknown, optimum feed-forward gains can be established, making it possible for the robot to follow commands with good responses.

If the above learning processes are carried out in combination with each application program executed by the user, then actual robot movements can be optimized in actual environments in which the robot is used. That is, it is possible to determine feed-forward gains which are optimum for the inertia of the mechanical system that is produced by the robot attitude in actual environments. The learning processes are carried out at the end of a process of teaching the robot to determine the feed-forward gains, and then an operation program for the robot is executed.

While the method of the present invention has been described with reference to the control system which has a feed-forward gain loop for each of position and velocity control loops, however, a feed-forward gain may be learned with respect to a control system which has a feed-forward loop for one of position and velocity control loops.

With the present invention, as described above, since a feed-forward gain is determined through a learning process, an optimum feed-forward gain can be established even if the inertia of a control system is unknown, thus enabling the control system to follow commands with good responses.

## Claims

1. A method of learning a feed-forward gain in motor control in a control system where a load inertia varies greatly, said method comprising the steps of:

    establishing a first equation: $(dK/dt) = [VER^*(dU/dt)]/[1 - VER^*(dU/dt)]$ where K represents a feed-forward gain, t time, VER an error, and U a command; and

    determining said feed-forward gain K according to said first equation in a learning process.

2. A method according to claim 1, further comprising the steps of:

    establishing, instead of said first equation, a second equation: $(dK/dt) = \alpha^*VER^*(dU/dt)$ where $\alpha$ is a positive constant close to 0; and

    determining said feed-forward gain K according to said second equation in a learning process.

3. A method according to claim 1, wherein said feed-forward gain belongs to a position control loop.

4. A method according to claim 1, wherein said feed-forward gain belongs to a velocity control loop.

5. A method according to claim 1, wherein said feed-forward gain belongs to each of a position control loop and a velocity control loop.

6. A method according to claim 6, further including the steps of:

    fixing the first feed-forward gain of said position position control loop;

    learning the second feed-forward gain of said velocity control loop in the learning process; and

    thereafter, learning said first feed-forward gain in the learning process.

F i g . 1

Fig. 2

Fig. 3

Fig. 4

Fig. 5

# INTERNATIONAL SEARCH REPORT

International Application No  PCT/JP91/00145

**I. CLASSIFICATION OF SUBJECT MATTER** (if several classification symbols apply, indicate all) [6]

According to International Patent Classification (IPC) or to both National Classification and IPC

Int. Cl[5]  H02P5/00

**II. FIELDS SEARCHED**

| Minimum Documentation Searched [7] | |
|---|---|
| Classification System | Classification Symbols |
| IPC | H02P5/00, G05B13/02, G05B11/32 |

Documentation Searched other than Minimum Documentation
to the Extent that such Documents are Included in the Fields Searched [8]

Jitsuyo Shinan Koho                 1960 - 1990
Kokai Jitsuyo Shinan Koho           1971 - 1990

**III. DOCUMENTS CONSIDERED TO BE RELEVANT** [9]

| Category* | Citation of Document, [11] with indication, where appropriate, of the relevant passages [12] | Relevant to Claim No. [13] |
|---|---|---|
| X | JP, U, 2-9905 (Mitsubishi Heavy Industries, Ltd.), January 23, 1990 (23. 01. 90) | 1-6 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| May 7, 1991 (07. 05. 91) | May 27, 1991 (27. 05. 91) |
| International Searching Authority | Signature of Authorized Officer |
| Japanese Patent Office | |

Form PCT/ISA/210 (second sheet) (January 1985)